# EUROPÄISCHE PATENTSCHRIFT

(11) **EP 0 596 857 B1**
(45) Veröffentlichungstag und Bekanntmachung des Hinweises auf die Patenterteilung: **24.04.2002**
(21) Anmeldenummer: 93890211.1
(22) Anmeldetag: 27.10.1993
(51) Int. Cl.: B01D 33/073, B01D 33/21, B01D 33/66

(54) **Verfahren und Anlage zur Trennung von Feststoff-Flüssigkeit-Mischungen**
Process and device for separating mixtures of solids and liquids
Procédé et dispositif de séparation de mélanges particules solides-liquide

(30) Priorität: 06.11.1992 AT 219492
(43) Veröffentlichungstag der Anmeldung: 11.05.1994
(73) Patentinhaber: Andritz AG, 8045 Graz (AT)
(72) Erfinder: Koch, Manfred, Dr., A-8045 Graz (AT); Riemer, Hubert, Ing., A-8113 St. Oswald (AT); Pinter, Reinhard, Dipl. Ing. Dr., A-8045, Graz (AT)
(74) Vertreter: Schweinzer, Friedrich

(56) Entgegenhaltungen:
- WO-A-90/15655
- DE-A- 2 558 794
- DE-A- 3 614 668
- DE-A- 3 937 952
- DE-C- 2 947 329
- FR-A- 2 074 317
- US-A- 1 774 044
- US-A- 2 851 161
- US-A- 3 190 449
- US-A- 3 361 259
- US-A- 3 672 067
- BLANMEISTER: 'Die kontinuierliche Druckfiltration auf Drehfiltern' AUFBEREITUNGS-TECHNIK Bd. 8, Nr. 32, 1991, AT-VERLAG,WIEBADEN, Seiten 416 - 424

## Beschreibung

Die Erfindung betrifft Verfahren zur Abtrennung von Feststoffen und Flüssigkeiten aus, Feststoff-Flüssigkeit-Mischungen, bei dem die Mischungen unter Anwendung von Druckmedium in Form von Druckluft und/oder Dampf über einen Drehfilter druckgefiltert werden, wobei der aus dem gesamten Innenraum eines Druckbehälters bestehende Verfahrensraum unter Überdruck steht, sowie eine Druckfiltereinrichtung zur Durchführung des Verfahrens mit einem Drehfilter, dessen Oberfläche in Kontakt mit der Mischung steht, einem Druckraum, in welchem der Aufnahmebehälter und der Drehfilter angeordnet sind, Abführorganen zum getrennten Abführen von Filtrat und Feststoff und einer Druckmediumquelle zur Beschickung des Druckraums mit gas- und/oder dampfförmigem Druckmedium.

Derartige Verfahren und Vorrichtungen werden bereits mit Erfolg im Bereich der Aufbereitungsindustrie zur Bearbeitung von Erz- und Kohlekonzentraten eingesetzt. Eine spezielle Variante eines dafür geeigneten, in einem gegenüber den freien Atmosphäre unter Überdruck stehenden, abgeschloßenen Überdruckraum angeordneten, Vakuumfilters wird in der DE-C 2 947 329 (Stahl) beschrieben. Die erhöhten Forderungen der Entfeuchtung von Erz- oder Kohlekonzentraten bzw. eine Anwendung zur Dekontamination von verseuchten Erden ist damit jedoch nicht in befriedigender Weise durchführbar. Stahl schlägt zur Verbesserung vor, wie bei der normalen, herkömmlichen Vakuumfiltration bekannt, Dampf zu verwenden, wobei beim Betrieb eines Filters unter einer Dampfhaube bei einem Druck von 1 bar Überdruck, d.h. einem absoluten Druck von 2 bar bereits Dampf mit einer Temperatur von 120 °C zur Verfügung steht.

Weiters sind aus der US-A-3,361,259 (von der Gathen) Verfahren und Vorrichtungen bekannt, bei denen bei einer Vakuumfiltration zusätzlich in einigen Bereichen der Filterfläche Dampf durch eine Dampfhaube aufgebracht wird, um die Entwässerung zu verbessern. Ein ähnliches Verfahren ist aus der DE-A 25 58 794 (Klöckner-Humboldt-Deutz) bekannt, wobei hier spezielle Ausgestaltungen der Dampfhaube beschrieben werden. Im Endbereich des Filters ist anschließend an die Dampfhaube eine weitere Haube zur Messung des Entwässerungsgrades mittels durchströmender Heißluft angeordnet. Auch mit diesen Anordnungen ist eine den Anforderungen entsprechende Entfeuchtung von Erz- oder Kohlekonzentraten bzw. eine Dekonamination verseuchter Erden nicht erzielbar.

Die FR-A 2 074 317 zeigt ein Vakuumfilter mit einer Dampfhaube, bei dem auf der Suspensionsoberfläche Isolatoren vorgesehen sind, um die Wärmeverluste zu verringern. Die erhöhten Forderungen der Entfeuchtung von Erz- oder Kohlekonzentraten bzw. eine Anwendung zur Dekontamination von verseuchten Erden ist damit jedoch nicht in befriedigender Weise durchführbar.

Erfindungsgemäß wird daher vorgeschlagen, daß die Dampfhaube oberhalb des Eintauchbereichs des Filters, zum gezielten Beschicken nichteintauchender Filterbereiche mit Druckmedium vorgesehen, mit dem Aufnahmebehälter verbunden ist und den nichteintauchenden Filterbereich vollständig zum Druckraum hin abschirmt, wobei zur Beschickung der Dampfhaube und des Druckraums getrennte Druckmedienquellen zur Erzeugung unterschiedlicher Druckmedien vorgesehen sind. Durch die vollständige Abschirmung und Abtrennung des Druckraums vom Dampfraum unter der Dampfhaube kann die hohe Temperatur des Dampfes direkt zur Filtration genützt werden und es ergeben sich wesentliche Dampfersparnisse sowie eine einfache Ausführung der im Druckbehälter untergebrachten Nebenaggregate.

Günstige Ausgestaltungsformen der erfindungsgemäßen Druckfiltereinrichtung sind in den Unteransprüchen 2 bis 10 beschrieben.

Beispiele der Erfindung werden anhand von Zeichnungen beschrieben, wobei Fig. 1 ein Verfahrensschema gemäß der Erfindung, Fig. 2 eine erfindungsgemäße Variante des Verfahrens, Fig. 3 eine weitere erfindungsgemäße Variante des Verfahrens und Fig. 4 den Kern einer erfindungsgemäßen Vorrichtung bzw. Anlage zur Durchführung des Verfahrens darstellen.

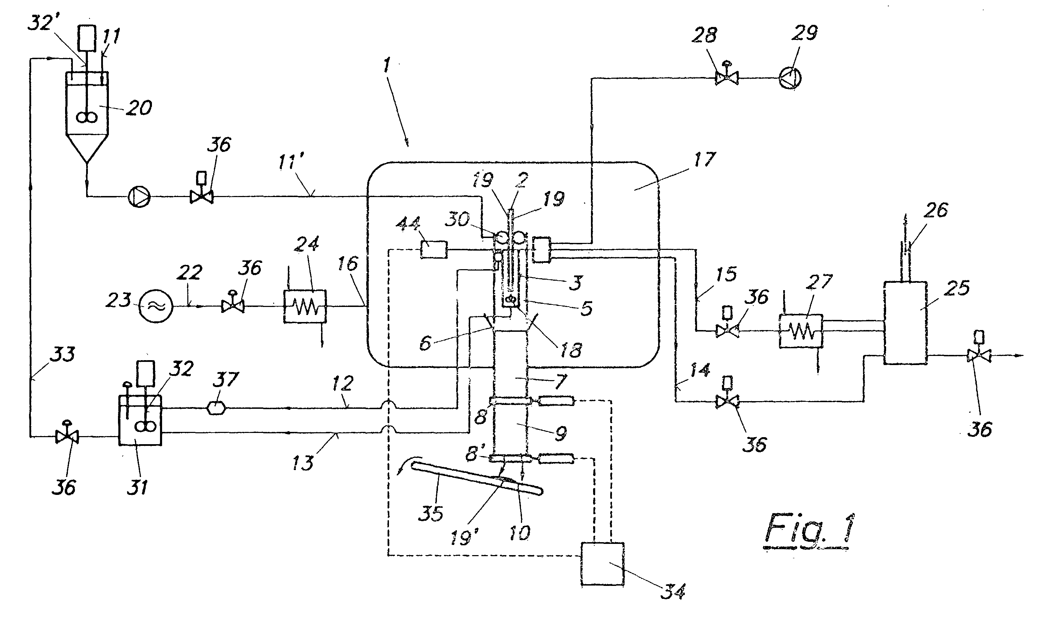

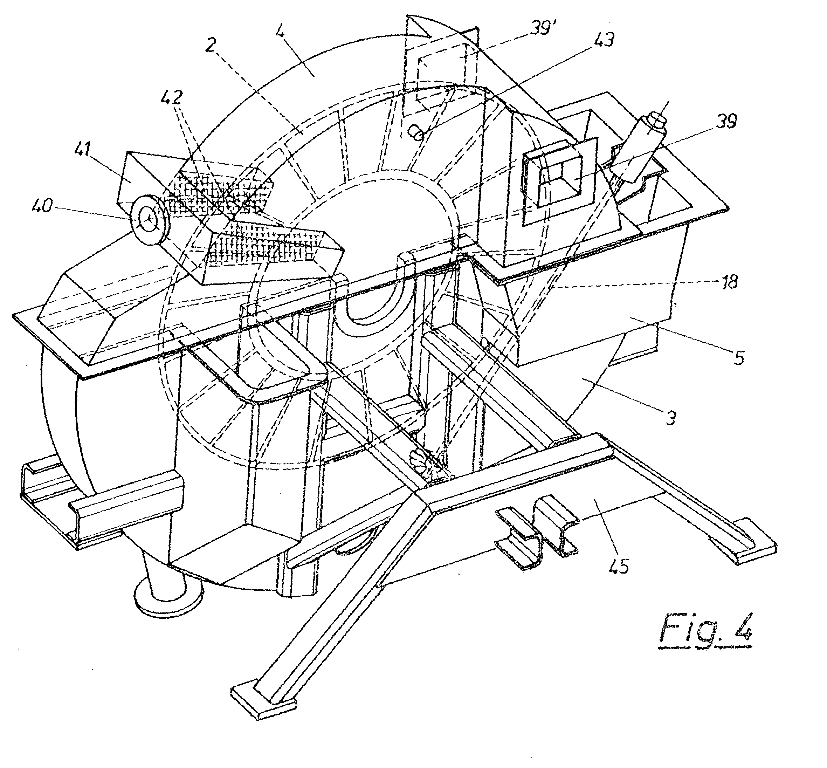

Das erfindungsgemäße Verfahren soll nun kurz anhand von Fig. 1 beschrieben werden. Die mineralische Suspension oder Trübe aus einer Erz- oder Kohleaufbereitung bzw. verseuchte Erde wird aus einem Vorlagebehälter 20 mit Rührwerk 32' bei entsprechendem hydrostatischen Vordruck von der Pumpe 21 angesaugt und von oben über eine Filtrataufgabevorrichtung 30 in den Filtertrog 3 gepumpt. Der Filtertrog 3 ist im Druckkessel 1 installiert. Der Trog 3 wird zur Vermeidung von Feststoffaufkonzentrationen mit permanentem Überlauf 12 und Ablauf 13 gefahren. Die Durchströmung des Filtertroges 3 mit Trübe bzw. die Trübehomogenisierung wird durch ein Rührwerk 18 unterstützt (siehe auch Fig. 4!). Der Förderstrom der Trübezufuhrpumpe 21 stellt sich durch den über einen Frequenzumformer geregelten Elektromotor in Abhängigkeit von der Trübeüber laufmenge automatisch ein. Die Trübeüberlaufmenge wird durch eine Durchflußmeßstelle 37 erfaßt. Der Überlaufstrom 12 und der Ablaufstrom 13 fließen mit gravimetrischem Gefälle in einen als Druckrührbehälter ausgebildeten Suspensionssammelbehälter 31 mit Rührwerk 32. Aus dem Druckbehälter 31 kann die Trübe über eine (nicht dargestellte) niveaugesteuerte Pumpe mit abgetauchtem Ansaugrohr oder nur mittels Druckgefälle zurück in den Vorlagebehälter gefördert werden. Als Arbeitsmedium wird dem Filter 2 Druckluft aus einer Druckluftstation, z.B. einem Luftkompressor 23 oder Dampf aus dem Dampfnetz der Anlage (nicht dargestellt) zugeführt. Die Luft bzw. der Dampf können vor Eintritt in den Druckraum noch mittels eines Erhitzers 24 auf die notwendige Temperatur gebracht werden. Das Kuchenbildungsfiltrat 14 mit möglichst geringen Anteilen an Luft strömt in einen Filtratabscheider 25, in den ebenfalls das Entfeuchtungsfiltrat nach Kühlung im Luft-/Gaskühler 27, in dem das Kondensat niedergeschlagen wird, eingeleitet wird. Der Abluftstrom strömt am Filtratabscheider 25 bei 26 oben aus. Das abgeschiedene Filtrat-/Kondensatgemisch kann entsprechend entsorgt werden. Der entwässerte Feststoff (Erz-, Kohlekonzentrat) bzw. der dekontaminierte Boden 10 wird durch eine Schieberschleuse 7,8,8',9 ausgetragen. Der von der Filterscheibe 2 (siehe auch Fig. 4!), z.B. mittels Snap-blow Ventil 28 und Druckluft aus dem Snap-blow Kompressor 29 abgenommene Filterkuchen fällt dabei über beidseits der Filterscheibe 2 angebrachte Ausfallschächte 5 (siehe auch Fig. 4!) in einen Ausfalltrichter 6. Von dort gelangt er in den Schleusenvorlagebehälter 7. Abwechselnd wird nun ein Schleusenschieber 8,8' geöffnet bzw. geschlossen, wodurch der Filterkuchen erst in die Schleusenzwischenkammer 9 und anschließend zum Filterkuchenaustrag 10 gelangt. Die Schleusenschieber 8,8' werden durch ein Hydraulikaggregat 34 betrieben. Der ausgetragene Filterkuchen 19' wird z.B. von einem Förderband 35 abtransportiert. Die Mengen von Luft, Dampf, Suspensionszufuhr, -überlauf, -Abzug sowie Filtratmenge können durch Regelventile gesteuert bzw. die entsprechenden Leitungen auch gänzlich abgesperrt werden.

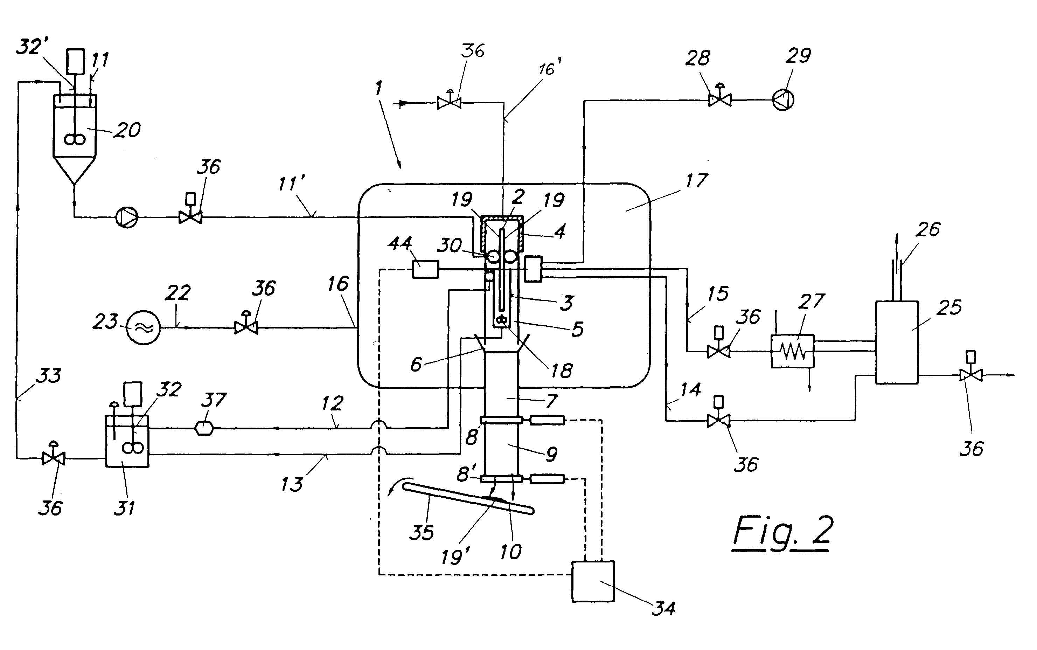

Fig. 2 stellt nun eine Variante des erfindungsgemäßen Verfahrens dar, wobei hier der Dampf bzw. die erhitzte Luft in eine über der Filterscheibe 2 angebrachte Dampfhaube 4 geleitet wird, die über dem Filtertrog 3 angeordnet und temperaturisoliert ist. Die zur Erzeugung des Druckes im Druckkessel 1 benötigte Druckluft strömt als warme Luft mit gleichem Druck in den außerhalb der Dampfhaube 4 liegenden Kesselraum 17 (nicht vorgeheizt, aber aus einem Kompressor ohne Kühlung). Bei Verwendung von Dampf zur Erzielung einer Filtration unter erhöhter Temperatur wird der Luftdruck z.B. auf 4,0 bar absolut eingestellt. Das entspricht 143,6°C Sattdampftemperatur (bei Verwendung von Wasserdampf). Der Luftdruck wird gemessen und stellt die Führungsgröße für den anzugleichenden Dampfdruck im Kesselraum 17 dar. Dieser wird dem Luftdruck auf delta-p ca. < = 0,05 bar nachgeregelt. Die Druckdifferenzregelung zwischen Luftraum 17 und Dampfhaube 4 wird so gestaltet, daß vorzugsweise Dampf in den Luftraum entweicht. Die Dampfhaube 4 sitzt nicht druckdicht auf dem Filtertrog 3.

Es ist ein kontrollierter Druckausgleich zwischen Dampfhaube 4 und Luftraum 17 im Filterkessel 1 (Spalt, Bohrung, Ventil) vorgesehen.

Ein ebenfalls möglicher, mäßiger Übertritt von Luft in den Dampfraum der Dampfhaube 4 stellt kein Problem dar. Ist die Luft kälter als der Dampf, so wird sie durch diesen schnell aufgeheizt. Die Temperatur des Gasgemisches wird nur wenig absinken.

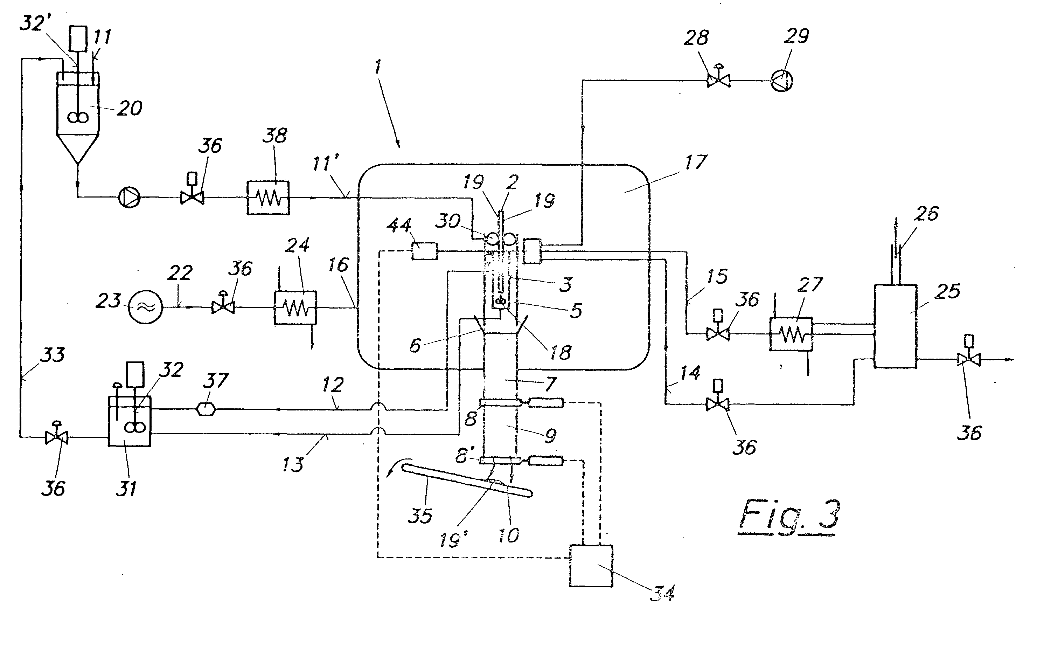

Fig. 3 veranschaulicht eine weitere Variante der Erfindung, bei der die Suspension in erhitztem Zustand der Filtration zugeführt wird. In einigen Fällen wird die zu filtrierende Suspension bereits unter hoher Temperatur in den Suspensionsvorlagebehälter eingebracht. Dies ist z.B. bei Ablauge aus dem Aluminiumprozeß und Rotschlamm der Fall, bei dem die Suspension Temperaturen von über 200°C aufweist und bis heute vor der Filtration heruntergekühlt werden muß. In den meisten Fällen jedoch muß die Suspension vor der Zufuhr zum Filtertrog 3 noch in einem Erhitzer 38 erwärmt werden. Durch die heiße Suspension wird insbesondere die Zähigkeit der Flüssigkeit herabgesetzt, wodurch diese leichter vom Feststoff getrennt werden kann. Das gilt analog auch für die Verwendung von erhitzter Druckluft bzw. Dampf, bei der ebenfalls die Verringerung der Viskosität der auszutreibenden Flüssigkeit maßgeblich zur besseren Filtration beiträgt.

In Fig. 4 ist als Anwendungsbeispiel ein für die erfindungsgemäßen Verfahren verwendbares Einscheibenfilter mit Filterscheibe 2 und Filtertrog 3 dargestellt. In den auf dem Gestell 45 montierten Filtertrog 3 ist weiters ein Rührwerk 18 installiert, das zur Homogenisierung der Suspension bzw. Trübe dient. Über dem Filtertrog 3 ist eine Dampfhaube 4 angebracht, die Öffnungen 39,39' für Druckhalteklappen aufweist. Diese Klappen öffnen abhängig von der Druckdifferenz zwischen Dampfhaube 4 und dem Druckraum 17 (Fig. 1 bis 3!), in dem das Filter aufgestellt ist. Sie können z.B. mittels Federkraft oder Gegengewichten auf einen bestimmten Grenzwert zum Öffnen eingestellt werden. Der Dampf bzw. die erhitzte Druckluft wird über einen Stutzen 40 in eine Dampfkammer 41 geleitet, von wo aus der Dampf bzw. die erhitzte Druckluft über beidseitig der Filterscheibe 2 vorgesehene Öffnungen 42, z.B. in Form eines Lochbleches, direkt auf den bereits anfiltrierten Filterkuchen 19 geleitet wird. Die Temperatur und/oder der Druck unter der Dampfhaube 4 wird über Meßsonden 43 gemessen und entsprechend den Erfordernissen eingeregelt. Für spezielle Anwendungsfälle, z.B. zur Filtration von leicht sedimentierenden Stoffen, können im Filtertrog 3 noch weitere Einbauten, wie z.B. Leitbleche, spezielle Suspensionszufuhr und -abfuhreinrichtungen, zur Trübehomogenisierung vorgesehen sein. Der Filterkuchen wird dann in die Fallschächte 5 abgeworfen bzw. mit Schabern abgenommen und fällt in den (hier nicht dargestellten, aber in den Fig. 1 bis 3 angedeuteten) Ausfalltrichter 6, wobei Ausfallschacht 5 und Ausfalltrichter 6 dicht miteinander verbunden sein können.

Die Beispiele dienen nur zur Erläuterung der Erfindung, wobei auch andere Anwendungsfälle wie z.B. bei Mehrscheibenfiltern, Trommelfiltern oder auch Bandfiltern im Druckkessel, denkbar sind. Auch die Anwendung der Erfindung allgemein auf die Trennung bzw. Filtration von Flüssigkeits-Feststoff-Mischungen ist unter Umständen von beachtlichem Vorteil, insbesondere im Hinblick auf die ökonomische Verfahrensführung.

### Bezeichnungen und Bezugszeichen:

- 1: Druckkessel
- 2: Filterscheibe
- 3: Filtertrog
- 4: Dampfhaube
- 5: Ausfallschacht
- 6: Ausfalltrichter
- 7: Schleusenvorlagebehälter
- 8,8': Schleusenschieber oben, unten
- 9: Schleusenzwischenkammer
- 10: Filterkuchenaustrag
- 11,11': Suspensionszufuhr
- 12: Suspensionsüberlauf
- 13: Suspensionsabzug
- 14: Kuchenbildungsfiltrat
- 15: Entfeuchtungsfiltrat
- 16,16': Anspeisung für Dampf bzw. erhitzte Druckluft
- 17: Druckraum, Verfahrensraum
- 18: Rührwerk
- 19,19': Filterkuchen
- 20: Suspensionsvorlagebehälter
- 21: Suspensionspumpe
- 22: Druckluftleitung
- 23: Kompressor
- 24: Luft-/Dampferhitzer
- 25: Filtratabscheider
- 26: Abluft-/Abgasstrom
- 27: Luft-/Gaskühler
- 28: Snap-Blow Ventil
- 29: Snap-Blow Kompressor
- 30: Suspensionsaufgabe
- 31: Suspensionssammelbehälter
- 32,32': Behälterrührwerk
- 33: Suspensionsrückführung
- 34: Hydraulikaggregat für Schleuse
- 35: Förderband für Feststoffabtransport
- 36: Regelventile
- 37: Suspensionsüber laufmengenmessung
- 38: Suspensionserhitzer
- 39,39': Öffnungen für Klappen
- 40: Dampfstutzen
- 41: Dampfkammer
- 42: Öffnungen, Lochblech
- 43: Meßsonde
- 44: Filterantrieb
- 45: Gestell für Filtertrog

## Patentansprüche

1. Druckfiltereinrichtung zur Abtrennung von Feststoffen und Flüssigkeiten aus Feststoff-Flüssigkeit-Mischungen, mit einem Aufnahmebehälter (3) für die Mischung, einem Drehfilter (2), dessen Oberfläche in Kontakt mit der Mischung steht, einem Druckraum (17), in welchem der Aufnahmebehälter (3) und der Drehfilter (2) angeordnet sind, Abführorganen zum getrennten Abführen von Filtrat und Feststoff sowie einer Druckmediumquelle (23) zur Beschickung des Druckraums (17) mit gas- und/oder dampfförmigem Druckmedium, wobei innerhalb des Druckraums (17) eine Haube oberhalb des Eintauchbereichs des Filters vorgesehen ist, **dadurch gekennzeichnet, daß** die Haube (4), zum gezielten Beschicken nichteintauchender Filterbereiche mit Druckmedium vorgesehen, mit dem Aufnahmebehälter (3) verbunden ist und den nichteintauchenden Filterbereich vollständig zum Druckraum (17) hin abschirmt, wobei zur Beschickung der Haube (4) und des Druckraums (17) getrennte Druckmedienquellen (23) zur Erzeugung unterschiedlicher Druckmedien vorgesehen sind.

2. Druckfiltereinrichtung nach Anspruch 1, **dadurch gekennzeichnet, daß** der Aufnahmebehälter (3) mit einem Überlauf versehen ist.

3. Druckfiltereinrichtung nach Anspruch 1 oder 2, **dadurch gekennzeichnet, daß** das Drehfilter ein Scheibenfilter ist.

4. Druckfiltereinrichtung nach einem der Ansprüche 1 bis 3, **dadurch gekennzeichnet, daß** im Aufnahmebehälter (3) Einrichtungen (18) zur Homogenisierung der Mischungen, und zwar zur Erzeugung einer zur Trenn- bzw. Filterbewegung zusätzlichen Bewegung der Mischung angeordnet sind.

5. Druckfiltereinrichtung nach Anspruch 4, **dadurch gekennzeichnet, daß** die Einrichtungen (18) als Rührwerk ausgebildet sind.

6. Druckfiltereinrichtung nach einem der Ansprüche 1 bis 5, **dadurch gekennzeichnet, daß** mindestens eine Ventilklappe (39,39') zur Ermöglichung der Überströmung von Druckmedium zwischen Dampfhaube (4) und Druckraum (17) vorgesehen sind.

7. Druckfiltereinrichtung nach Anspruch 6, **dadurch gekennzeichnet, daß** die Ventilklappen (39, 39') beidseitig der Filterscheibe (2) angeordnet sind, und bei einer Druckdifferenz von etwa 0,05 bar öffnen.

8. Druckfiltereinrichtung nach einem der Ansprüche 1 bis 7, **dadurch gekennzeichnet, daß** die Druckmediumquelle zur Beschickung der Haube (4) zur Erzeugung von erhitzter Druckluft und/oder Dampf und die Druckmediumquelle (23) zur Beschickung des Druckraums (17) zur Erzeugung von Druckluft vorgesehen ist.

9. Druckfiltereinrichtung nach einem der Ansprüche 1 bis 8, **dadurch gekennzeichnet, daß** eine Heizeinrichtung (38) zum Erwärmen der Feststoff-Flüssigkeit-Mischungen vorgesehen ist.

10. Druckfiltereinrichtung nach einem der Ansprüche 3 bis 9, **dadurch gekennzeichnet, daß** die Haube (4), insbesondere beidseitig der Filterscheibe (2), Austrittsöffnungen (42) für den Dampf bzw. die erhitzte Druckluft aufweist.

## Claims

1. Pressure filter installation for removing solid and liquid material from solid-liquid mixtures, with a receiving tank (3) for the mixture, a rotary filter (2) whose surface is in contact with the mixture, a pressure chamber (17) where the receiving tank (3) and the rotary filter (2) are mounted, drainage elements to drain off the filtrate and solids separately, as well as a pressure medium source (23) to supply the pressure chamber (17) with gaseous and/or vaporous pressure medium, where a steam hood (4) is provided inside the pressure chamber (17) above the submersion sector of the filter, **characterised by** the steam hood (4), provided for targeted feed of pressure medium to non-submerging filter areas, being connected to the receiving tank (3) and screening off the non-submerging filter area entirely towards the pressure chamber (17), where separate pressure media sources (23) to generate different pressure media are provided to supply the steam hood (4) and the pressure chamber (17).

2. Pressure filter installation according to Claim 1, **characterised by** the receiving tank (3) being provided with an overflow.

3. Pressure filter installation according to Claim 1 or 2, **characterised by** the rotary filter being a disc filter.

4. Pressure filter installation according to one of Claims 1 to 3, **characterised by** fittings (18) being mounted in the receiving tank (3) to homogenise the mixtures, this being to generate more movement in the mixture in addition to the separating and filtering movement.

5. Pressure filter installation according to Claim 4, **characterised by** the fittings (18) being designed as an agitator.

6. Pressure filter installation according to one of Claims 1 to 5, **characterised by** at least one valve flap (39, 39') being provided to enable pressure medium to flow between steam hood (4) and pressure chamber (17).

7. Pressure filter installation according to Claim 6, **characterised by** the valve flaps (39, 39') being mounted on both sides of the filter disc (2) and by their opening at a differential pressure of approximately 0.05 bar.

8. Pressure filter installation according to one of Claims 1 to 7, **characterised by** the pressure medium source for feeding the steam hood (4) being provided to generate heated compressed air and/or steam and the pressure medium source (23) for feeding the pressure chamber (17) being provided to generate compressed air.

9. Pressure filter installation according to one of Claims 1 to 8, **characterised by** a heating device (38) being provided to heat the solid-liquid mixtures.

10. Pressure filter installation according to one of Claims 3 to 9, **characterised by** the steam hood (4) having exit holes (42) for the steam and heated compressed air, respectively, particularly on both sides of the filter disc (2).

## Revendications

1. Installation de filtration sous pression pour la séparation de liquides et solides de mélanges solides et liquides, avec un bac récipient (3) du mélange, un filtre rotatif (2) dont la surface est en contact avec le mélange, une chambre à pression (17) où sont montés le bac récipient (3) ainsi que le filtre rotatif (2), des organes d'évacuation pour évacuer le fitrat et les solides séparément, ainsi qu'une source de milieu de pression (23) pour alimenter la chambre à pression (17) avec un milieu à pression à l'état gazeux ou à vapeur, où une hotte à vapeur (4) est pourvue à l'intérieur de la chambre à pression (17) au-dessus de la partie submergée du filtre, **caractérisée en ce que** la hotte à vapeur (4), visant à l'alimentation appropriée du milieu à pression aux parties du à filtre non submergées, est connectée au bac récipient (3) et blinde la partie non submergée du filtre par rapport à la chambre de pression (17), des milieux de pression séparés (23) étant prévus en vue de créer des milieux de pression différents pour alimenter la hotte à vapeur (4) et la chambre à pression (17).

2. Installation de filtration sous pression selon la revendication 1, **caractérisée** en ce le bac récipient (3) ayant une surverse.

3. Installation de filtration sous pression selon la revendication 1 ou 2, **caractérisée en ce que** le filtre rotatif est un filtre à disques.

4. Installation de filtration sous pressions selon l'une des revendications 1 à 3, **caractérisée en ce que** des équipements (18) sont montés dans le bac récipient (3) pour homogénéiser les mélanges, afin de créer un mouvement du mélange qui vient s'ajouter au mouvement de séparation et de filtration.

5. Installation de filtration sous pressions selon la revendication 4, **caractérisée en ce que** ces équipements (18) sont étudiés en tant que agitateur.

6. Installation de filtration sous pression selon l'une des revendications 1 à 5, **caractérisée en ce qu'**au moins un clapet de soupape (39, 39') est prévu pour permettre le passage du milieu de pression vers la zone entre la hotte à vapeur (4) et la chambre de pression (17).

7. Installation de filtration sous pression selon la revendication 6, **caractérisée en ce que** les clapets de soupape (39, 39') sont montés sur les deux côtés du disque de filtre (2) et qu'ils s'ouvrent à une différence de pression d'environ 0.05 bar.

8. Installation de filtration sous pression selon l'une des revendications 1 à 7, **caractérisée en ce que** la source de milieu de pression (23) pour alimentation de la hotte à vapeur (4) est prévue pour génération d'air comprimé chauffé et/ou de vapeur, et la source pour alimentation de la chambre à pression (17) est prévue pour la génération d'air comprimé.

9. Installation de filtration sous pression selon l'une des revendications 1 à 8, **caractérisée en ce qu'**un dispositif de chauffage (38) est prévu pour chauffer les mélanges solides-liquides.

10. Installation de filtration sous pression selon l'une des revendications 3 à 9, **caractérisée en ce que** la hotte à vapeur (4) a des trous de décharge (42) pour la vapeur respectivement l'air comprimé, surtout sur les deux côtés du disque de filtre (2).
